# EUROPEAN PATENT APPLICATION

(11) **EP 4 611 249 A1**
(43) Date of publication of application: **03.09.2025**
(21) Application number: 24160451.1
(22) Date of filing: 29.02.2024
(51) Int. Cl.: H02P 6/00

(54) **METHOD FOR OPERATING A LINEAR MOTOR**

(71) Applicant: ABB Schweiz AG, 5400 Baden (CH)
(72) Inventor: Herbst, Michael, 5164 Seeham (AT); Steinhauser, Armin, 4040 Linz (AT); Weber, Andreas, 5020 Salzburg (AT)
(74) Representative: Patentanwälte Pinter & Weiss OG

(57) **Abstract**

In order to compensate the effects of cogging in a linear motor (1) in a simple but yet effective way, it is provided, that cogging forces (F_{Cx}, F_{Cy}) at least in one direction of movement (x, y) of the shuttle (Tn) along the stator (2) are determined as a function of the relative position of the at least one shuttle (Tn) with respect to the stator (2) in the at least one direction of movement (x, y) and whilst the drive coils (ASi) in the region of the shuttle (Tn) are non-energized, that the determined cogging forces (F_{Cx}, F_{Cy}) are stored in the control unit (10), and in that the cogging forces (F_{Cx}, F_{Cy}) in the at least one movement direction (x, y) determined with non-energized drive coils (ASi) are used by the control unit (10) to compensate the cogging forces (F_{Cx}, F_{Cy}) during operation of the linear motor (1) in dependence of the relative position between a shuttle (Tn) for which the cogging forces (F_{Cx}, F_{Cy}) are compensated and the stator (2) during operation of the linear motor (1).

## Description

The present invention pertains to a method for operating a linear motor with at least one shuttle and a stator, whereas a plurality of drive coils is arranged on the stator and a number of drive magnets is arranged on the shuttle or a number of drive magnets is arranged on the stator and a number of drive coils is arranged on the shuttle, whereas during operation of the linear motor, the drive coils in the region of the shuttle are energized under control of a control unit to produce an electromagnetic field that interacts with a drive magnetic field produced by the drive magnets in order to generate a propulsive force that moves the shuttle along the stator. The invention does also pertain to a corresponding linear motor having at least one shuttle and a stator, whereas a plurality of drive coils is arranged on the stator and a number of drive magnets is arranged on the at least one shuttle or a number of drive magnets is arranged on the stator and a number of drive coils is arranged on the at least one shuttle, whereas a control unit of the linear motor is provided that is arranged to energize the drive coils in the region of the at least one shuttle during operation of the linear motor to produce an electromagnetic field that interacts with a drive magnetic field produced by the drive magnets in order to generate a propulsive force that moves the at least one shuttle along the stator.

Linear motors are well-established transport systems in which a moving part of the motor, often called shuttle, is propelled along a track by means of electromagnetic forces. In a linear motor, drive magnets (usually permanent magnets) interact with an electromagnetic field generated by energizing drive coils. A propulsion force is generated by this interaction that moves the shuttle along the track. There are different types of linear motors known. In a so called short-stator linear motor, the drive coils are arranged on the shuttle and the drive magnets are arranged along the track. In a so called long-stator linear motor, the drive coils are arranged along the track and the drive magnets are arranged on the shuttle. In such linear motors, the shuttle can be moved along the track, that is, the track defines the movement direction. In a planar motor, as further type of a linear motor, the drive magnets or the drive coils are arranged in a movement plane. A planar motor allows movement of the shuttle in the movement plane in two directions.

With a linear motor, multiple shuttles may be moved simultaneously and independent from each other (except with regard to collision avoidance) by controlling energization of the drive coils that interact with the respective drive magnets. This means that it is not necessary that always all drive coils are energized somehow, but only the drive coils interacting with a drive magnet need to be energized. Energization of a drive coils happens by an electrical drive coil current that is generated by applying a drive coil voltage to the drive coil. Changing the drive coil voltage changes the drive coil current and also the generated drive electromagnetic field. This allows control of the movement of a shuttle.

Examples of long-stator linear motors can be found in WO 2013/143783 A1, US 6,876,107 B2, US 2013/0074724 A1 or WO 2004/103792 A1. US 9,202,719 B2, for example, discloses the basic structure and operation of a planar motor.

It is well-known that in such linear motors so called cogging effects may occur. The reason for such cogging effects are position dependent reluctance (magnetic resistance) differences. This results in position dependent (cogging) force differences which try to move the shuttle to a position in which the acting magnetic field achieves a state with minimum energy. During operation of the linear motor, cogging represents a disturbance acting on the shuttle that influences the movement of the shuttle, especially at lower speeds of the shuttle.

In order to compensate for cogging effects, it is known to skew the drive magnets or the teeth on which the drive coils are wound. This results in reduced cogging due the averaging of above effects. The disadvantage of this approach is that not only cogging forces are reduced due to the averaging effects, but also the propulsion forces, which is undesirable. Apart from that, skewed drive magnets or drive coils are more difficult to produce which results in higher cost for the linear motor.

There are also methods known, which aim at compensating for cogging effects. US 6,922,025 B2 describes that cogging errors are measured during operation of the linear motor and are then used to compensate cogging effects with the motor control. In US 11,718,482 B2 the current reference and the feedback signal of the control of the linear motor are used to determine a cogging force experienced by the shuttle at a certain location of the shuttle along the track. The cogging force is stored and is used to compensate the cogging each time the shuttle travels along the same length of the track. In both cases it is necessary to measure certain signals during the operation of the linear motor and to use the measured signals for compensating cogging. This increases the required computational power of the control of the linear motor and increases also complexity of the control.

It is an object of the present invention to compensate cogging effects during operation of the linear motor in a simple but yet effective manner.

This object is achieved by determining cogging forces at least in one direction of movement of the shuttle along the stator as a function of the relative position of the shuttle with respect to the stator in the at least one direction of movement and whilst the drive coils in the region of the shuttle are non-energized, by storing the determined cogging forces in the control unit, and by using the stored cogging forces in the at least one movement direction by the control unit to compensate the cogging forces during operation of the linear motor in dependence of the relative position between the shuttle and the stator during operation of the linear motor. According to the invention, the cogging forces are simply be determined without energized drive coils. In that way, the cogging effects are determined without magnetic influences of the active drive coils which simplifies the way the cogging forces are determined. Despite this simplified approach, the cogging effects can sufficiently be compensated during operation of the linear motor. This at least significantly improves the movement of the shuttle as compared to the situation without cogging compensation.

Cogging compensation can be improved, when additionally, also cogging forces in a direction transverse to a direction of movement along the stator and whilst the drive coils in the region of the shuttle are non-energized are determined. This allows to additionally compensation cogging effects in the transverse direction.

Cogging compensation can significantly be improved when the cogging forces in the at least one movement direction and/or the cogging forces in the transverse direction are additionally determined as a function of the distance of the at least one shuttle to a further adjacent shuttle on the stator. The magnetic fields of adjacent shuttles on the stator can significantly influence each other and such influences can easily be considered in that way.

Cogging effects can also be pronounced when the stator comprises a segment gap in the at least one direction of movement across which the shuttle moves during operation of the linear motor. Such segment gaps can also be considered by determining the cogging force additionally as function of a segment gap length. This also allows for considering segment gaps of different gap lengths during operation of the linear motor.

In an especially easy implementation of the cogging compensation, a cogging compensation unit calculates a compensation signal as inverse of the cogging force and superimposes the compensation signal onto a force setpoint value of a movement controller of the shuttle.

This object is also achieved with a linear motor as mentioned in the outset above, whereas said linear motor is configured to be operated according to a method as claimed in any of claims 1 to 14.

The present invention is described below in greater detail with reference to Figs.1 to 10, which show schematic and non-limiting advantageous embodiments of the invention by way of example. In the drawings:
Fig.1 is an exemplary embodiment of a long stator linear motor,
Fig.2 is an exemplary embodiment of a planar motor,
Figs.3a and Fig.3b are different views of a possible embodiment of a planar motor,
Fig.4 and Fig.5 are embodiment of different sections of a stator of a linear motor,
Fig.6 and Fig.7 show determined cogging forces for different sections of the stator of linear motor,
Fig.8 is an exemplary embodiment of a movement controller for the shuttle with cogging compensation,
Fig.9 is a further embodiment of a movement controller for the shuttle with cogging compensation and
Fig.10 shows the effects of the inventive cogging compensation.

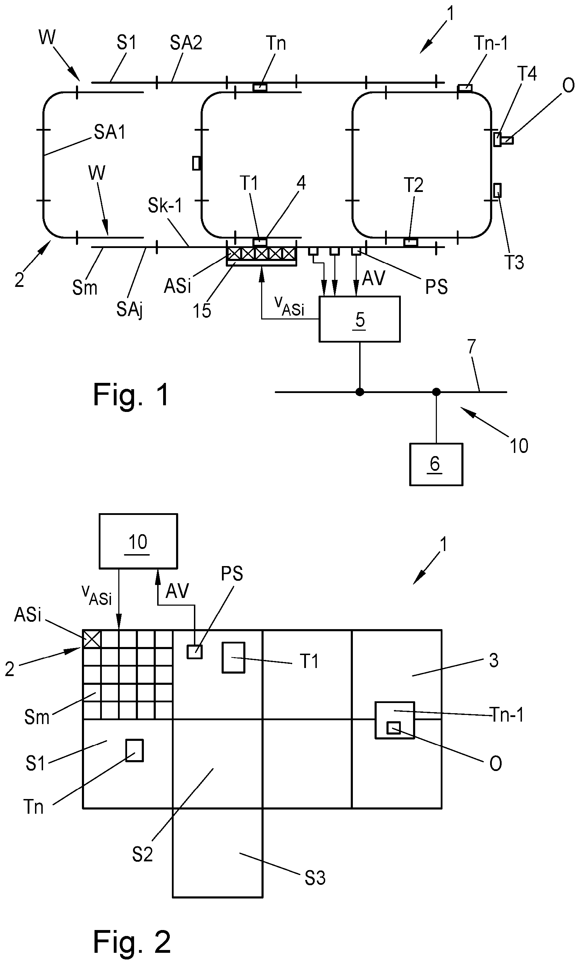

The present invention as described in the following pertains to a linear motor 1. The linear motor 1 comprises a plurality i of drive coils ASi that are at least temporarily energized with a drive coil voltage v_{ASi} for generating a drive electromagnetic field that interacts with a drive magnet 4 of the linear motor 1 for driving at least one shuttle Tn of the linear motor 1. In general, the drive coils are designated by ASi, where "i" is an index, in order to be able to distinguish the drive coils if necessary and the reference sign ASi is used when no specific drive coil is addressed. The linear motor 1 can be used for transporting an object O on a shuttle Tn. Such a linear motor 1 is exemplarily shown in Fig.1 in the form of a long-stator linear motor. In Fig.2, the linear motor 1 is designed as planar motor. In both cases, the drive coils ASi are arranged on the stator 2 of the linear motor 1 and the drive magnet 4 on the shuttle Tn. But it could also be the other way round, namely with drive coils ASi being arranged on the shuttle Tn and the drive magnet 4 on the stator 2. In this case, there would be drive magnets 4 arranged along the stator 2.

To better understand the invention, the basic well-known principle and construction of a linear motor 1 as long-stator linear motor and as planar motor is explained in the following with reference to Fig.1, Fig.2 and Fig.3a, 3b.

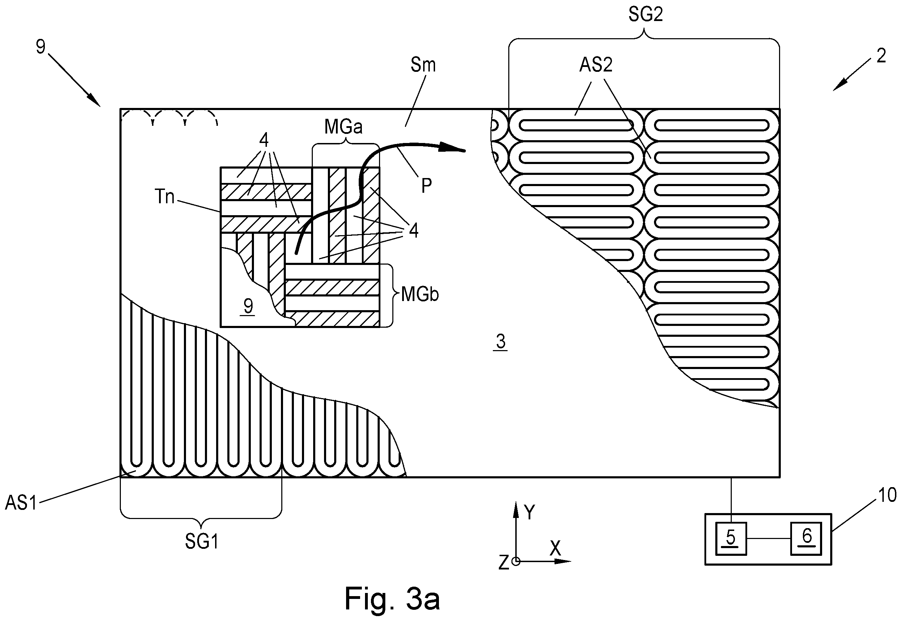

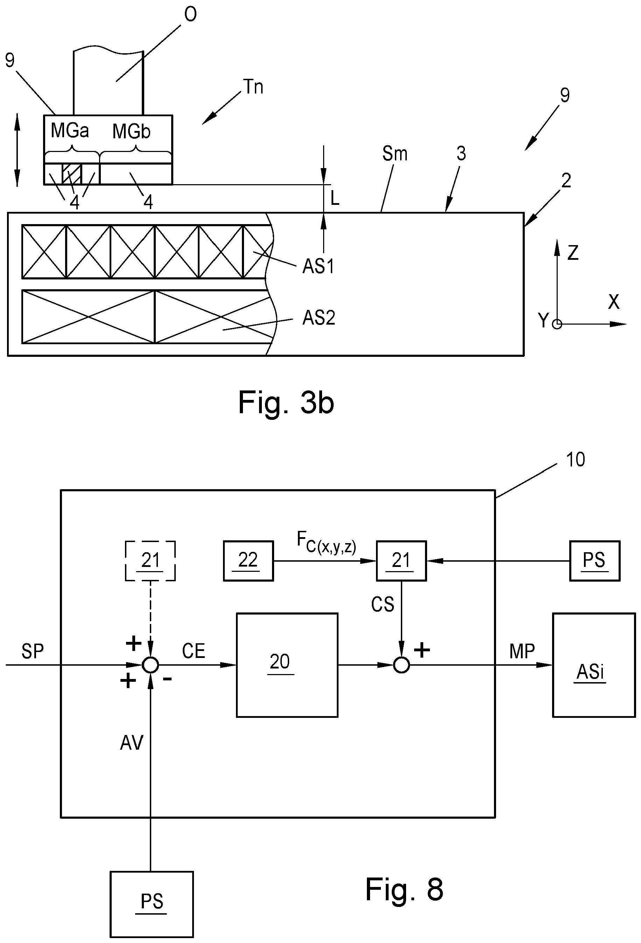

With reference to Fig.3a and Fig.3b the well-known principle and design of a planar motor (PLM) as example of a linear motor 1 is explained by way of an exemplary embodiment. Fig.3a shows the planar motor in a partially broken-away plan view, and Fig.3b shows the planar motor in a partially broken-away side view. The planar motor has at least one stator segment Sm. "m" is used as an index in order to be able to distinguish different stator segments, wherein, generally, the reference sign Sm is used when no specific stator segment is addressed. The stator segment(s) Sm form the stator 2 of the PLM with a movement plane 3. At least one shuttle Tn is movable in the movement plane 3 at least two-dimensionally in two main movement directions that correspond to X and Y axis of a coordinate system, for example. "n" is used as an index in order to be able to distinguish different shuttles, wherein, generally, the reference sign Tn is used when no specific shuttle is addressed. The movement plane 3 can be oriented in space in any way but usually forms a flat surface. For the sake of simplicity, only one stator segment Sm is shown in Fig.3a. Of course, a plurality of stator segments Sm (which can be different in shape) are usually arranged next to each other in order to form the stator 2 and a larger movement plane 3 (as in Fig.2). As a result, the PLM can have a modular workspace in which the shuttles Tn can move defined by the arrangement of stator segments Sm. Movement planes 3 of different shapes and sizes can be realized by arranging stator segments Sm in the desired way. In the movement plane 3 of the stator 2, several shuttles Tn can naturally also be moved simultaneously and independently of one another. It is even possible to use shuttles Tn of different size or shape, for transporting different objects O on the shuttles Tn, for example. It is to note, that the useable workspace does not necessarily correspond to the complete movement plane 3 formed by the stator segments Sm. It is possible that some or all shuttles Tn are blocked from entering certain defined regions of the movement plane 3, for example.

A first coil group SG1 with several drive coils AS1, which defines the first main movement direction H1, and a second coil group SG2 with several drive coils AS2, which defines the second main movement direction H2, are arranged on each stator segment Sm. The drive coils ASi of the first coil group SG1 are arranged next to each other in a specific direction - in this case, in the X-direction of a Cartesian coordinate system. The drive coils ASi of the second coil group SG2 are arranged next to each other in a specific direction - in this case, the Y-direction of a Cartesian coordinate system. The drive coils AS1, AS2 of the first and second coil groups SG1, SG2, as shown in Fig.3a, are preferably arranged relative to one another such that the two main movement directions are orthogonal to one another.

At least on drive magnet 4 is arranged on the at least one shuttle Tn, which interacts electromagnetically with drive coils ASi of at least one of the two coil groups SG1, SG2 in the region of the shuttle Tn for moving the shuttle Tn. Usually several drive magnets 4 are arranged on the shuttle Tn, also in different polarity. For this purpose, the PLM shuttle Tn generally has a main body 9, on the underside of which (facing the movement plane 3) the drive magnets 4 are arranged, as can be seen in Fig.3b. In Fig.3a, the main body 9 is shown largely broken away to be able to see the arrangement of the drive magnets 4. As indicated in Fig.3b, the drive magnets 4 are arranged in several magnet groups MGa, MGb. The drive magnets 4 are usually arranged with alternating polarity, as indicated in Fig.3a. The drive magnets 4 can also be oriented differently in the different magnet groups MGa, MGb.

In the example shown, two first magnet groups MGa and two second magnet groups MGb are arranged on the shuttle Tn. A single first magnet group MGa and a single second magnet group MGb per shuttle Tn are substantially sufficient to move the shuttle Tn in two directions in the movement plane 3. Of course, more than two first magnet groups MGa and more than two second magnet groups MGb can also be arranged per shuttle Tn. There are many different arrangements of magnet groups MGa, MGb known, like a 1-D arrangement, 2-D arrangement, a Halbach arrangement etc.

With a PLM as shown in Fig.3a and Fig.3b, a substantially unrestricted movement of a shuttle Tn in the two main movement directions would be possible, for example, in the movement plane 3 of the stator segment 2. It could in this case be possible to move the shuttle Tn, for example, only along the X-axis or only along the Y-axis. The shuttle Tn can naturally be moved simultaneously in both main movement directions, e.g., along any possible two-dimensional movement path P lying in the movement plane 3 with an X-coordinate and a Y-coordinate, as indicated on the shuttle Tn in Fig.3a. Of course, it is possible that there are different movement paths P for different shuttles Tn. But also the other four degrees of freedom can also be used at least to a limited extent (translational movement in the vertical direction Z and rotation about the three axes X, Y, Z).

Drive coils ASi can also be arranged one above the other (here, in the Z-direction). In the embodiment according to Fig.3b, the drive coils AS1 of the first coil group SG1 are arranged closer to the movement plane 3 in the direction perpendicular to the movement plane 3 (here, in the Z-direction) than the drive coils AS2 of the second coil group SG2. There are many different arrangements of drive coils ASi known, like a single-layer arrangements, a herringbone arrangement, a double-layer arrangement etc.

In operation of the planar motor, in a possible embodiment, a moving magnetic field is generated in the first main movement direction by corresponding activation of the first drive coils AS1 that interact with a shuttle Tn. The moving magnetic field in the first main movement direction mainly interacts electromagnetically with the drive magnets 4 of the first magnet group(s) MGa in order to move the respective shuttle Tn in the first main movement direction H1. Analogously, by activating the second drive coils AS2 that interact with the shuttle Tn, a substantially moving magnetic field is generated in the second main movement direction, which substantially moving magnetic field mainly interacts electromagnetically with the drive magnets 4 of the second magnet group(s) MGb in order to move the shuttle Tn in the second main movement direction. Depending on the activation of the drive coils AS1, AS2 in the region of a shuttle Tn, the moving magnetic fields are superimposed, as a result of which the shuttle Tn can be moved in the desired manner along the prespecified two-dimensional movement path P in the movement plane 3. As already mentioned also movements in further degrees of freedom could be realized as well.

The drive coils ASi are usually activated by energization in such a way that a force acts on the shuttle Tn also in the direction of the Z-axis, with which force the shuttle Tn is kept levitating above the movement plane 3 for generating an air gap L (Fig. 1b) (which is also possible while the shuttle Tn is at a standstill).

A long-stator linear motor (LLM), as further example of a linear motor 1 and as shown in Fig.1, differs from a planar motor mainly in that the drive coils ASi are arranged next to each other along the stator 2 so that the movement plane is reduced to a movement track that is defined by the geometric shape of the stator 2. Also the LLM comprises at least one stator segment Sm that forms the stator 2.

For reasons of clarity, well-known guide structures for guiding a shuttle Tn along the stator 2 and/or for holding a shuttle Tn on the stator 2 of an LLM are not shown in the Fig.1. Such guide structures can be designed as desired and needed, for example using rollers.

Hence, a long-stator linear motor consists of a stator 2 and a number of shuttles Tn (with n > 1), which can be moved along the stator 2. "n" is used as an index in order to be able to distinguish different shuttles, wherein, generally, the reference sign Tn is used when no specific shuttle is addressed. For the movement, drive coils ASi (with i > 1) are arranged on the stator 2, one behind the other in a direction of movement along the stator 2. For the sake of clarity, only a few of the drive coils ASi are shown in Fig.1. However, it is known that the drive coils ASi are arranged along the entire area of movement of the long-stator linear motor. At least one drive magnet 4, usually several drive magnets in the form of an arrangement of permanent magnets, is arranged on a shuttle Tn. This is only implied in Fig.1 for reasons of clarity. The drive magnet 4 faces the drive coils ASi on the stator 2 and is separated from the drive coils ASi by an air gap.

The stator 2 can be composed of individual stator segments Sm (with m > 1), with a number of drive coils ASi on each stator segment Sm as in Fig.1. The stator 2 can also be composed of individual stator sections SAj (with j ≥ 1) (as in Fig.2), which can be interconnected via switches Wand form the stator 2. "j" is used as an index in order to be able to distinguish different stator sections, wherein, generally, the reference sign SAj is used when no specific stator section is addressed. A stator section SAj can in turn be composed of a plurality of stator segments Sm. At a switch W, a shuttle Tn can switch over from one stator section SAj to another stator section SAj+1 and can continue its movement on the stator section SAj+1.

The drive coils ASi can be energized by applying a drive coil voltage v_{Asi} and thus generate a drive electromagnetic field which interacts with the drive magnets 4 of a shuttle Tn to generate a force acting on the transport unit Tn. This force then serves as a propulsive force for moving the shuttle Tn along the stator 2 in the desired direction.

In an LLM, it is also possible for drive coils ASi to be arranged on both sides of the stator 2, as viewed in the direction of movement, and for the drive magnet 4 of a shuttle Tn to be moved therebetween (as indicated by the transport unit Tn in Fig.1). If drive magnets 4 are also provided on both sides of the shuttle Tn as viewed in the direction of movement, then by energizing the drive coils ASi on both sides, forces (also different forces) acting on the shuttle Tn can also be generated on both sides simultaneously. With such an arrangement, electromagnetic switches W can in particular also be implemented on a linear long-stator linear motor.

As already mentioned at the outset, the linear motor 1 could also be designed such that the drive coils ASi are arranged on a shuttle Tn and the drive magnets 4 on the stator 2 of the linear motor 1.

A control unit 10 is provided, with which the drive coils ASi of the linear motor 1 are controlled for energizing, in order to generate the drive electromagnetic fields for moving the shuttles Tn. Essentially, this means that the required drive coils ASi are energized under control of the control unit 10 such that any shuttle Tn executes a desired movement path P in the movement plane 3 (PLM) or along the stator 2 (LLM) and with a desired motion profile (e.g. speed, acceleration). In case of an PLM, the movement path P is not limited only to a movement in the main movement directions, but can also specify movements in the four other degrees of freedom. In case of an LLM the movement path P can also include different stator sections SAj connected by switches W. The movement path P can be defined, e.g., for implementing a transport task with the linear motor 1 as a transport device in a machine in which the linear motor 1 is integrated. The drive coils ASi of the linear motor 1, are controlled by the control unit 10 such that a shuttle Tn moves along the desired movement path P and with the desired motion profile. To this end, the control unit 10 controls not only the movement path P but also the dynamics of the movement, especially speed, acceleration, jerk, at any point in time.

An actual value AV of the movement of a shuttle Tn, e.g., an actual position (also an actual orientation of the shuttle Tn) or an actual speed, is usually also used in the control unit 10 for the implementation or control of the movement of a shuttle Tn. For this purpose, suitable sensors, e.g., position sensors PS, can also be arranged on or along the stator 2, the detected measured variables of the sensors are transmitted as actual values AV of the movement of a shuttle Tn to the control unit 10 or actual values AV of the movement are determined in the control unit 10 from the detected measured variables.

In order to be able to determine the position of a shuttle Tn on the stator 2, position sensors PS can be arranged on the stator 2, as in the example of Fig.1 or Fig.2, with only some of the position sensors PS being shown for reasons of clarity. The position sensors PS provide the detected position signals, for example, as actual values AV to the control unit 10. However, known sensorless position detection can also be implemented in an LLM as well as in a PLM in order to detect the position of a shuttle Tn.

A position sensor PS can detect a magnetic field of the shuttle Tn, for example the magnetic field that emanates from the drive magnets 4, or one that emanates from particular position magnets on the shuttle Tn. Such a position sensor PS can be designed, for example, as a magnetostrictive sensor, magnetoresistive sensor or as a Hall sensor, although of course there are other types of sensors that are able to detect a magnetic field. However, sensors which detect a different physical variable are of course also conceivable, for example optical or inductive sensors.

Power electronics 15 (Fig.1) can be provided in the linear motor 1 to generate the drive coil voltage v_{Asi} of a drive coil ASi. The control unit 10 can control the power electronics 15 in order to energize the drive coils ASi in the desired manner, especially with the required electric drive coil current.

The control unit 10 can also be designed as a distributed controller (as in Fig.1), e.g., having a number of coil control units 5, for example one coil control unit 5 per stator segment Sm, and a superordinate system control unit 6 that is connected to the number of the coil control units 5 - for example, via a communications network 7. For example, the system control unit 6 can implement the movement of the shuttle Tn and prespecify target points for the shuttle Tn in order to move the shuttle Tn according to a movement path P and according to the desired motion profile (dynamics of movement) to perform a desired transport task. A collision monitoring and avoidance for the shuttles Tn can also be implemented in the system control unit 6. A coil control unit 5 can be provided in order to convert the specifications of the system control unit 6 into drive coil voltages v_{ASi}. However, this division into coil control unit 5 and system control unit 6 is only exemplary. In general, a control unit 10 is provided which controls the drive coils ASi in order to produce the desired movements of the shuttles Tn. However, how this control unit 10 is designed, for example in the form of a cascaded controller consisting of a plurality of interconnected controllers or as single controller, is irrelevant for the present invention.

A control unit can in general be implemented as microprocessor-based hardware, e.g., as a computer, microcontroller, digital signal processor (DSP), programmable logic controller (PLC), etc., on which corresponding control programs for implementing the respective function run. An embodiment as an integrated circuit, such as, for example, an application-specific integrated circuit (ASCI) or field programmable gate array (FPGA), is also conceivable.

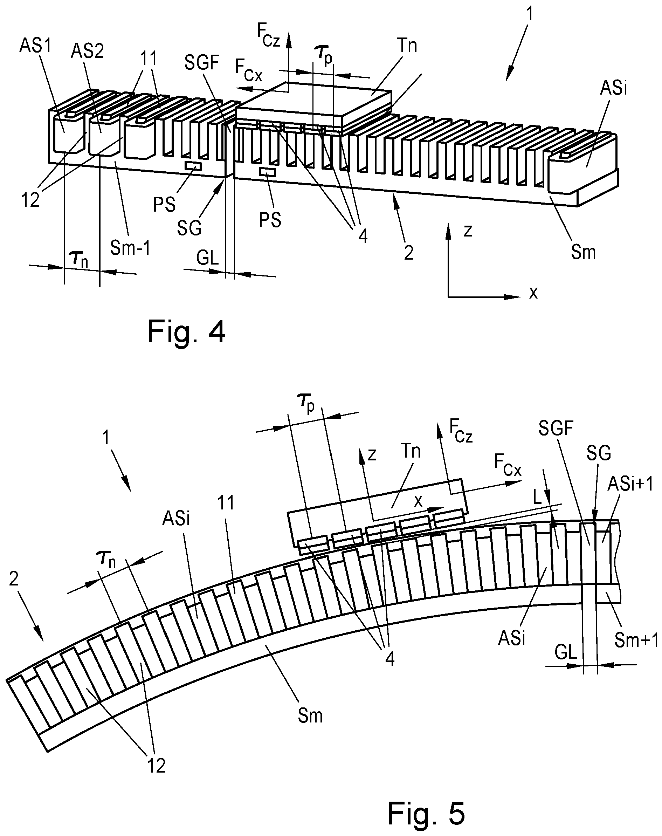

Fig.4 shows a section of the stator 2 of a LLM as example of a linear motor 1. Shown are two stator segments Sm, Sm-1. Each stator segment Sm has a number of teeth 11, 12. In the example of Fig.4 there are main teeth 11 onto which drive coils ASi are arranged. In the embodiment of Fig.4 the teeth 11, 12 are arranged on the stator 2, but could also be arranged on the shuttle Tn when the drive coils ASi are on the shuttle Tn. Between two main teeth 11 there is provided a secondary tooth 12 without drive coil ASi, but said secondary teeth 11 are only optional. Only some drive coils ASi are shown in Fig.4 for reasons of clarity. The distance between two main teeth 11 in movement direction x is the tooth pitch τₙ, which is usually constant. The tooth pitch τₙ is defined by the design of the linear motor 1 and is known. Shown is also a shuttle Tn with an arrangement of drive magnets 4 with a magnet pitch τₚ. The magnet pitch τₚ is defined by the design of the linear motor 1 and is known. Between two adjacent stator segments Sm, Sm-1 there can be a stator gap SG. The stator gap SG affects the magnetic field in the region of the gap. The stator gap SG can optionally at least partly be filled with a stator gap filler SGF (as in Fig.4) in order to provide for a smoother transition of the shuttle Tn from one stator segment Sm-1 to the next stator segment Sm. The stator gap filler SGF is usually a magnetically conductive material in order to prevent a rapid drop of the magnetic field in the stator gap SG. In the case of a planar motor, the same as set out for Fig.4 basically applies in two directions. Fig.5 shows a curved section of a LLM stator 2.

For the invention, before normal operation of the linear motor 1 commences, the drive coils ASi are not energized and, hence, do not generate a drive magnetic field. The drive magnets 4 in the embodiments of Fig.4 and Fig.5 are permanent magnets, but could also be in the form of electromagnets (which would be energized). The drive magnets 4 generate a drive magnetic field. This drive magnetic field interacts with the magnetically conductive parts of the stator 2 - with the iron stator teeth 11, 12 and the iron yoke connecting the stator teeth 11, 12, for example. This magnetic interaction causes a cogging force F_{C(x, y, z)} (this notation stands for any or any combination of the cogging forces F_{Cx}, F_{Cy}, F_{Cz}) acting on the shuttle Tn in dependence on the position of the shuttle Tn with respect to the stator 2 because the shuttle Tn tends to assume a position that minimizes the energy of the acting magnetic field that is influenced by the position of the shuttle Tn relative to the stator 2. The cogging force F_{C(x, y, z)} acts in the movement direction x and also in the transverse direction z, for example. In case of a planar motor also in the second movement direction y. The cogging force Fc, in movement direction x tries to move the shuttle Tn in a minimum energy position. The cogging force F_{Cz} in transverse direction affects the attraction forces between the shuttle Tn and the stator 2 or the force with which the shuttle Tn is held levitating above the stator in case of a planar motor. This means that the cogging force F_{C(x, y, z)} is not constant but changes as a function of the relative position of the shuttle Tn with respect to the stator 2. This varying cogging force F_{Cx}, F_{Cy}, F_{Cz} can be measured or can be determined by means of model of the linear motor 1 or by means of a simulation. As model, a well-known finite element model (FEM) or a well-known reluctance model of linear motor 1 could be used. A reluctance model is described for example in WO 2022/049026 A1.

The cogging force F_{Cx}, F_{Cy}, F_{Cz} could be measured by providing an acceleration sensor on a shuttle Tn and by moving the shuttle Tn manually or with a handling device, like a robot or a second driven shuttle Tn with sufficient distance to the first shuttle to avoid energized coils in the region of the shuttle that is used for measurement, along the stator 2 in a given direction x, y, z. Instead of using an acceleration sensor, the acceleration could also be calculated from a measured position and/or speed. Cogging could be detected by varying accelerations, that is measured with the acceleration sensor, for example. With the known mass of the shuttle Tn, the detected acceleration could be converted into the cogging force F_{Cx}, F_{Cy}, F_{Cz} in dependence on the relative position of the shuttle Tn with respect to the stator 2. When a handling device is used, a force transducer could be provided on the handling device measuring the acting force between the driven shuttle and the driving handling device. The thus measured force would also be a measurement of the acting cogging force F_{Cx}, F_{Cy}, F_{Cz}.

In case of a LLM, the structure of the LLM could be used for measuring the cogging force F_{Cx}, F_{Cy}, F_{Cz}. In a section of the LLM having drive coils ASi at both sides (as seen in movement direction x) of the shuttle Tn and with a shuttle Tn having drive magnets 4 on both sides (as seen in movement direction x) of the shuttle Tn, one side could be used for propulsion for moving the shuttle Tn along the stator 2 by energizing the drive coils ASi on this side and the other non-energized side could be used for measuring the cogging force F_{Cx}, F_{Cy}, F_{Cz}. In this case, the LLM itself would be the handling device for moving the shuttle Tn.

Another possibility to measure the cogging force F_{Cx}, F_{Cy}, F_{Cz} acting on a shuttle Tn is to bring the shuttle Tn to a specific speed by properly energizing the drive coils ASi in the region of the shuttle Tn. When the speed is achieved, the drive coils ASi are turned off and the shuttle Tn is allowed to come to a stop by the acting friction forces. The acceleration of the shuttle Tn is obtained which should in that case correspond to friction and cogging forces. With a known friction model of the linear motor which models the friction between the guide structures on the stator and the shuttle Tn, possibly in dependence of speed of the shuttle Tn, the cogging force F_{Cx}, F_{Cy}, F_{Cz} could be obtained. The acceleration could also in this case be calculated from the measured position and/or speed, or by using an acceleration sensor mounted on the shuttle Tn.

Due to the non-energized drive coils ASi, a model of the linear motor 1 only has to model the magnetic interaction of the number of drive magnet 4 with the magnetically conductive parts of the linear motor 1, ie. with parts of the stator 2 or parts of the shuttle Tn.

A FEM, for example, models the linear motor 1 in known manner by subdividing the respective parts of the linear motor 1 into smaller, simpler parts called finite elements. Magnetic field variables, like the magnetic flux density or the magnetic field strength, can then numerically be calculated for each finite element whereas the finite elements are coupled by boundary conditions. As a result, the magnetic field variable can be determined along a given geometry which in turn allows the calculation of acting magnetic forces, like the cogging force Fc, for example. A FEM is well-known and does not need more detailed explanation.

As the geometry and materials of the linear motor 1 with the stator 2 and the shuttle Tn are known, it is possible to adapt the FEM model to a certain embodiment of the linear motor 1. This allows also the calculation of cogging forces Fc for different embodiments of the linear motor 1 or for different shuttles Tn of a linear motor 1.

As no energization of the drive coils ASi is required in accordance with the invention for determining the cogging forces Fc, calculation of the cogging forces Fc by means of a model of the linear motor 1 can be done offline and models can be utilized that require more computational power, like FEM, than would be possible if the model were calculated online during operation of the linear motor 1.

In a linear motor 1 with a plurality of stator segments Sm, the segment gaps SG between adjacent segments Sm in movement direction of the shuttle Tn are not necessarily equal. Due to tolerances, in the dimensions of a segment SM but also in the arrangement of the segments Sm to form the stator 2, the length GL of the segment gaps SG in movement direction of the shuttle Tn may vary. Such variation of the segment gap SG can also be considered in the determined cogging forces F_{Cx}, F_{Cy}, F_{Cz}. When using a model for determining the cogging force F_{Cx}, F_{Cy}, F_{Cz}, such geometrical influences can easily be considered and the determined cogging force F_{Cx}, F_{Cy}, F_{Cz} could also be determined and stored in dependence of a certain segment gap SG in movement direction x, y, z of the shuttle Tn. The actual length GL of the segment gaps SG of a stator arrangement could then be determined, e.g. measured at the linear motor 1, and the cogging force F_{Cx}, F_{Cy}, F_{Cz} could then be compensated also in dependence on an actual segment gap SG in movement direction of the shuttle Tn.

The actual length GL of the segment gap SG could also be obtained during operation of the linear motor 1 using available position sensors PS, for example. By using the values of the position sensors PS next to the segment gap SG on each side (as seen in movement direction x) of the segment gap SG (as indicated in Fig.4) it is possible to calculate the actual segment gap SG with the known dimension and design of the shuttle Tn, especially the arrangement and position of position magnets on the shuttle Tn. To this end, the shuttle Tn is positioned at the gap so that the position sensors PS at the two sides of the segment gap SG deliver position sensor values.

There is another possibility of determining the actual length GL of the segment gap SG with two position sensors PS at both sides (as seen in movement direction x) of the segment gap SG. In this case, the position sensors PS do not necessarily have to be the sensors next to the segment gap SG. The at least one shuttle Tn is positioned on one side (as seen in movement direction x) of the segment gap SG and the position is measured a first time. The at least one shuttle Tn is positioned on the other side (as seen in movement direction x) of the segment gap SG and the position is measured a second time. The difference between the first position and second position is a measure of the actual segment gap length GL of the segment gap SG. The difference corresponds to the distance between the two position sensors PS which is know from the known geometry of the stator 2. The difference between the first position and the second position could be compared to the expected difference given by the known geometry of the stator 2. The deviation between the differences is due to a varying length GL of the segment gap SG which allows determination of the actual length GL of the segment gap SG. This can also be done with different position sensors PS and using a mean value of several determined actual lengths GL of the segment gap SG.

There is yet another possibility for determining the actual length GL of the segment gap SG. In this approach, a first drive coil ASi on a first side (as seen in movement direction x) of the segment gap SG is used as transmitting coil and a second drive coil ASi+1 on the other side (as seen in movement direction x) of the segment gap SG is used as receiving coil. The transmitting coil is driven with a specific coil voltage v_{ASi} causing an electromagnetic field which induces a voltage in the receiving coil. The induced voltage can be measured and certain characteristics of the induced voltage, like amplitude, phase, frequency content, integral, slope, etc., can be correlated with the length of the segment gap SG. The induced coil voltage can be measured at the receiving coil using a voltage sensor when the receiving coil is switched to open-loop. Alternatively, the current in the receiving coil is controlled to zero and the voltage applied by the current controller, that corresponds to the induced voltage, is monitored. Mean values over a number of such determinations, possibly also with switched transmitting and receiving coils, could increase the signal-to-noise ratio (SNR) which improves the determination of the segment gap SG. The SNR could also be improved by using several transmitting coils that are driven with the same specific coil voltage v_{ASi}. The SNR could also be improved by placing a shuttle Tn or a magnetically conductive part above the segment gap SG or by placing a magnetically part into the segment gap SG during the determination, as this decreases the air gap for the electromagnetic field and increases the sensitivity of the transmitted signal regarding the actual length GL of the segment gap SG. The magnetically part is preferably at least partly placed into a gap between the iron yokes of the adjacent segments Sm or in the region of the axial ends of the teeth 11 opposite to the iron yoke.

Determining the actual segment gap SG during operation of the linear motor 1 would also allow to compensate for varying segment gaps SG due to thermal expansion of the segments Sm. For that, the temperature of the segments Sm that are adjacent to the segment gap SG can be determined, for example measured with temperature sensors, and the thermal expansion of the segments Sm can be determined, for example using a thermal model of the segment that delivers the length of the segment Sm in movement direction as a function of the temperature.

For a planar motor, the segment gap SG can of course be determined in two movement directions x, y in the same way as explained above.

Also coupling effects between two shuttles could have an impact onto the determined cogging force F_{Cx}, F_{Cy}, F_{Cz}. When two adjacent shuttle Tn, Tn+1 are positioned close to each other on the stator 2, which is often the case during operation of the linear motor 1. The drive magnetic fields of the adjacent shuttles Tn, Tn+1 influence each other, which also affects the cogging force F_{Cx}, F_{Cy}, F_{Cz}. It is especially advantageous, to consider such coupling effects on the cogging force F_{Cx}, F_{Cy}, F_{Cz}. Using a model to determine the cogging force F_{Cx}, F_{Cy}, F_{Cz} this can of course easily be done upfront, by considering a second shuttle Tn+1 in the model. The influence of the distance of the adjacent shuttles Tn, Tn+1 on the cogging force F_{Cx}, F_{Cy}, F_{Cz} of the shuttle Tn, also on a straight and/or on a curved section, could then be modelled and the cogging force F_{Cx}, F_{Cy}, F_{Cz} could be determined not only in dependence on the relative position of the shuttle Tn with respect to the stator 2, but also in dependence on the distance to a second adjacent shuttle Tn+1. During operation of the linear motor 1, the positions of all shuttles Tn are known which allows to compensate the cogging force F_{Cx}, F_{Cy}, F_{Cz} not only in dependence on the relative position of the shuttle Tn with respect to the stator 2, but also in dependence on the distance to a second adjacent shuttle Tn+1.

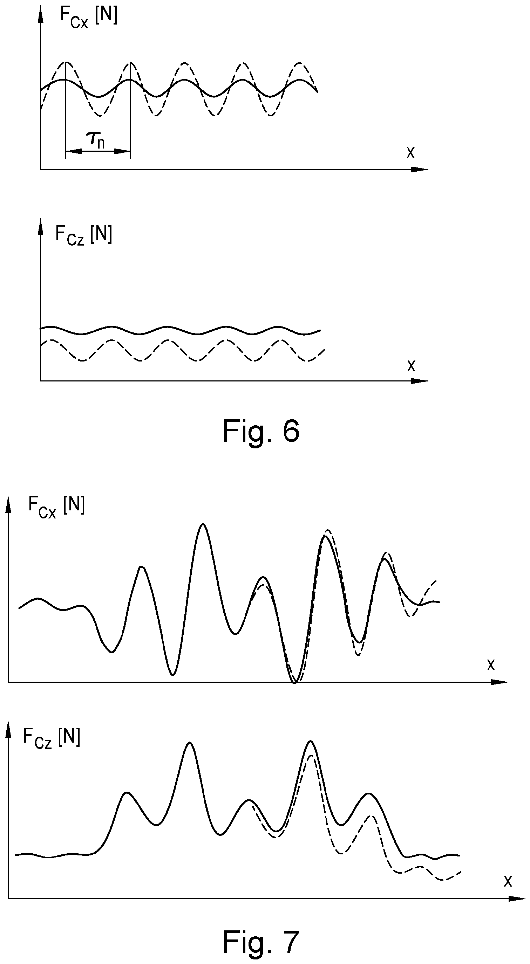

Fig.6 shows the determined (measured, calculated from a model, simulated) cogging force F_{Cx}, F_{Cz} of the linear motor 1 of Fig.4 and Fig.5 in direction of movement x and in transverse direction z transverse to the movement direction x as function of the position of the shuttle Tn relative to the stator 2 in movement direction x. In this case, the acting magnetic field is not affected by a stator segment gap SG, which means that the shuttle Tn is sufficiently far away from the stator segment gap SG. The force F_{Cz} in transverse direction z is the attraction force, with which the shuttle Tn is held on the stator 2, for example. During the operation of the linear motor 1 in which the drive coils ASi in the region of a shuttle Tn are energized, the cogging force Fc, in movement direction x is the force that acts as disturbance for the propulsive forces with which the shuttle Tn is moved along the stator 2 during operation. In Fig.6, the solid line shows the cogging forces F_{Cx}, F_{Cz} for a straight stator section (as in Fig.4) and the dashed line shows the cogging forces F_{Cx}, F_{Cz} for a curved stator section (as in Fig.5). In a curved section, the movement direction x is the tangent of the curved section.

From Fig.6 it can also be seen that for a given design of the linear motor 1, like the arrangement of drive magnets 4, air gap L, magnetically conductive parts, materials etc., the cogging forces F_{Cx}, F_{Cz} vary periodically. As reluctance forces of the magnetic arrangement of the linear motor 1 is responsible for the cogging forces F_{Cx}, F_{Cz}, the period of variation is either the main tooth pitch τₙ, for example 15mm, when there are only main teeth 11 or the half main tooth pitch τₙ when there are secondary teeth 12 in between two adjacent main teeth. This allows that the cogging forces F_{Cx}, F_{Cz} need to be determined (measured, calculated from a model, simulated) only for a very short length, typically only for the length or half length of the tooth pitch τₙ, as the cogging forces F_{Cx}, F_{Cz} will simply repeat when the shuttle Tn is moved along the stator 2.

Fig.7 shows the determined (measured, calculated from a model, simulated) cogging forces F_{Cx}, F_{Cz} for the transition of the shuttle Tn over a segment gap SG, again for a straight stator section (solid line) and for a curved section (dashed line) that can be determined optionally and in addition to the cogging forces F_{Cx}, F_{Cz} within a stator 2 or a stator segment Sm. Also in this case, the main tooth pitch τₙ or half of the main tooth pitch τₙ (in case of secondary teeth 12) can be seen in the curves of the cogging forces F_{Cx}, F_{Cz}, but in this case, the cogging forces F_{Cx}, F_{Cz} need to be determined for the complete transition, i.e. until the shuttle Tn has completely crossed the segment gap SG. It is however possible to use symmetry in determining the cogging forces F_{Cx}, F_{Cz} in the area of the segment gap SG. In this case it would be sufficient to only determine the cogging forces F_{Cx}, F_{Cz} for half a transition across the segment gap SG. It would for example be possible to determine the cogging forces F_{Cx}, F_{Cz} until a centre of the shuttle Tn in movement direction x and the centre of the segment gap SG in movement direction x are aligned. For the rest of the transition symmetry could be used. The cogging force Fc, in the region of the transition in movement direction is point-symmetric, whereas the cogging force F_{Cz} in transverse direction is axis-symmetric. But also in this case, the cogging forces F_{Cx}, F_{Cz} need to be determined only for a rather short length (as compared to the complete length of a stator 2 or even a stator segment Sm), basically a little bit more than the length or half length of the arrangement of the drive magnets 4 or drive coils ASi on the shuttle Tn.

In case of a planar motor as linear motor 1, one would analogously also obtain the cogging forces F_{Cy} in the additional movement direction y as a function of the position of the shuttle Tn in this direction y.

The cogging forces F_{Cx}, F_{Cy}, F_{Cz} are determined for a given linear motor 1 design in advance when the linear motor 1 is non-operational and are stored in the control unit 10 of the linear motor 1. The cogging forces F_{Cx}, F_{Cy}, F_{Cz} can be stored by way of a lookup table with a given resolution, for example 0,1mm. The resolution can match the resolution of position sensors PS for example. It is also possible to interpolate between values in the lookup table. It would also be possible to fit a mathematical function, like a polynomial of a given order or with sine and cosine functions (Fourier approach), in the curve of the determined cogging forces F_{Cx}, F_{Cy}, F_{Cz} and to use the mathematical function to determine the cogging forces F_{Cx}, F_{Cy}, F_{Cz} at a certain position x. This would reduce the required storage in the control unit 10.

As outlined above, the cogging force F_{Cx}, F_{Cy}, F_{Cz} of a shuttle Tn could in addition also made dependent on other influences, like segment gap SG length in movement direction, adjacent further shuttle etc., and could be considered as well. The cogging force F_{Cx}, F_{Cy}, F_{Cz} would then also be stored in dependence of such an additional influence.

Instead of determining the cogging force F_{Cx}, F_{Cy}, F_{Cz} in a straight and in a curved section it is also possible to determine the cogging force F_{Cx}, F_{Cy}, F_{Cz} only in a straight or curved section and to convert the determined cogging force F_{Cx}, F_{Cy}, F_{Cz} into the other type of section with a given and known relationship. Such a relationship can be determined from the determined cogging force F_{Cx}, F_{Cy}, F_{Cz} in different types of stator sections. It has been found that the cogging forces F_{Cx}, F_{Cy}, F_{Cz} of a straight section multiplied by a certain factor, for example by four, is a good approximation of the cogging forces F_{Cx}, F_{Cy}, F_{Cz} in a curved section, for example. The multiplication factor can be dependent on the curvature of the curved section. Therefore, knowing the relationship, stored cogging forces F_{Cx}, F_{Cy}, F_{Cz} for a single type of section (e.g. straight or curved) would be sufficient.

For the invention, at least the cogging forces Fc, in one movement direction x are determined. For a planar motor, preferably the cogging forces F_{Cx}, F_{Cy} in both movement directions x, y are determined. In addition, the cogging forces F_{Cz} in transverse direction z could also be determined.

The determined cogging forces F_{Cx}, F_{Cz}, F_{Cy} can be stored in the control unit 10 for different stator sections, e.g. for a straight stator section and/or for a curved stator section, also different curved sections (with different curvatures for example). It is also possible to store the determined cogging forces F_{Cx}, F_{Cz}, F_{Cy} for different shuttles Tn or for different geometries of the stator 1 or for different air gaps L.

The such determined cogging forces F_{Cx}, F_{Cz}, F_{Cy} with non-energized drive coils ASi are then used by the control unit 10 to compensate the cogging effects during operation of the linear motor 1. This is explained with reference to Fig.8.

"To compensate" means in this regard that the effects of the cogging forces F_{Cx}, F_{Cz}, F_{Cy} on the movement of a shuttle Tn are at least reduced as compared to operation of the linear motor 1 without cogging compensation. As the cogging forces F_{Cx}, F_{Cz}, F_{Cy} are determined with unenergized drive coils ASi, any influence of the drive electromagnetic field on the cogging forces F_{Cx}, F_{Cz}, F_{Cy} is not reflected. Therefore, the effects of the cogging forces F_{Cx}, F_{Cz}, F_{Cy} will usually not be completely eliminated by the inventive approach. But the inventive approach allows to model the cogging forces F_{Cx}, F_{Cz}, F_{Cy} without operational parameters of the linear motor 1, like actual coil current or coil voltage values or like a current position error of the control. All it requires is knowledge of the position of the shuttle Tn with respect to the stator 2 which can be ensured at all times during operation of the linear motor 1. This makes compensation of cogging effects according to the invention much easier and requires less computational power during operation of the linear motor 1.

Fig.8 exemplarily shows a control unit 10 with a movement controller 20 for controlling the movement of a shuttle Tn of the linear motor 1. The movement controller 20 is implemented in the control unit 10, for example as control software that runs on computer hardware of the control unit 10. The movement controller 20 can implement a position control, speed control or force control of the shuttle Tn, for example. The control unit 10 receives a set point SP for controlling the movement of the shuttle Tn. The setpoint SP could be a set point position or a set point speed or a setpoint force of the shuttle Tn, or any other suitable setpoint. The control unit 10 receives also an actual value AV of the movement of the shuttle Tn, like an actual position from a position sensor PS or actual speed of the shuttle Tn, for example. As usual in a closed-loop control, a control error CE as difference between the set point SP and the actual value AV is determined. The movement controller 20, like a well-known PID controller or any other suitable type of controller, calculates a manipulated variable MP in order to reduce the control error CE. The manipulated variable MP is used to energize the active drive coil(s) ASi in the region of the shuttle Tn used for driving the shuttle Tn, and is usually a drive coil voltage v_{ASi} or a drive coil current for each active drive coil ASi, for example.

The control unit 10 preferably comprises a cogging compensation unit 21 that determines a compensation signal CS that is superimposed onto the output of the movement controller 20, onto the manipulated variable MP in this case, or alternatively onto the setpoint SP (shown dashed in Fig.8). "Superimposed" basically means that the value of the compensation signal CS is somehow "added" to the value of the output of the movement controller 20, which can be done by any basic arithmetical operation, like summation or multiplication.

The compensation signal CS is formed in the cogging compensation unit 21 from the determined and stored cogging force F_{C(x, y, z)}. In Fig.8 a data storage unit 22, like a computer memory, is provided in the control unit 10 in which the determined cogging force F_{C(x, y, z)} is stored as explained above. In order to be able to read out the cogging force F_{Cx}, F_{Cy}, F_{Cz} in dependence of the relative position of the shuttle Tn with respect to the stator 2, the cogging compensation unit 21 can be provided with the actual position of the shuttle Tn, by the positions sensors PS, for example, as in the embodiment of Fig.8.

The stored cogging force F_{C(x, y, z)} in adjacent segments, with or without stator segment gap SG, are advantageously mended together to avoid sudden changes in the compensation signal CS. Such sudden changes in the compensation signal CS can provoke sudden changes in the setpoint value for a controller which in turn can cause undesired (over)reactions of the controller.

The cogging compensation unit 21 could be implemented as software that runs on the micro-process based hardware of the control unit 10, could however also be implemented as separated piece of hardware, like a microprocessor-based hardware or an integrated circuit.

Often, such a movement controller 20 is implemented for each movement direction x, y, z. For a LLM, this can be done for example with a well-known dq-coordinate system, in which the q-component is responsible for the movement in movement direction x along the stator 2 and the d-component is responsible for the transverse direction z. The controller 20 would then determine an electric q-current and an electric d-current that are transformed into coil currents of the active drive coils ASi with a well-known Park transformation. To this end the cogging compensation unit 21 could determine the compensation signal CS as electric compensation current from the cogging force F_{Cx}, F_{Cz} and the known motor constant (force equals motor constant times current). The compensation current as compensation signal CS is then superimposed onto the manipulated variable MP, which would in this case also be an electric current for the drive coils ASi.

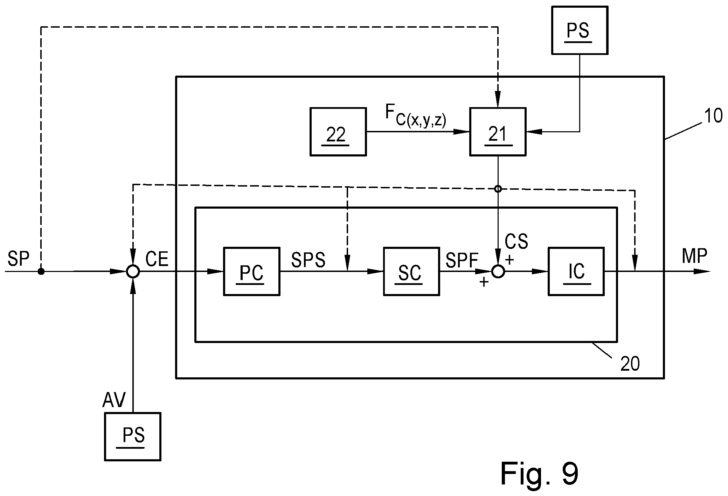

The movement controller 20 could also be implemented as cascaded controller comprising several successive controllers as is well known. This is exemplarily shown in Fig.9. The movement controller 20 comprises in this example a position controller PC that is followed by a speed controller SC that is followed by a current controller IC. The position controller PC receives a position setpoint and calculates a setpoint speed SPS as output of the position controller. The speed controller SC receives the setpoint speed SPS as input and calculates as output a force setpoint SPF for the following current controller IC. The current controller IC determines the coil voltages v_{Asi} or coil currents for the active drive coils ASi as manipulated variables MP of the movement controller 20. In such a cascaded controller, the compensation signal CS could basically be superimposed on an input or output of one of the cascaded controllers. The location where the compensation signal CS is superimposed does of course define by which physical quantity, like position, speed, force or current (voltage), the compensation signal CS is characterised. As the physical quantities used for controlling the movement of the shuttle Tn are related to each other in known manner, the determined and stored cogging force F_{C(x, y, z)} can simply be converted in each required physical quantity. The force can be converted into current by means of the known motor constant, for example. A changing force causes changing speed of the shuttle. Changing speed can be converted into changing position, for example.

In the example of Fig.9, the compensation unit 21 determines the inverse of the cogging force F_{Cx}, F_{Cz}, F_{Cy} as compensation signal CS and the compensation signal CS is superimposed onto the force setpoint SPF (output of speed controller SC). The following current controller then receives a changed force setpoint at its input so that the drive coils ASi are energized such that the cogging effects are compensated for. The compensation signal CS (in the correct physical quantity) could however be superimposed on every input or output in the controller cascade as well, as indicated with dashed lines in Fig.9.

Usually, the control is time discrete. This means that the movement controller 20 determines the manipulated variable MP in given time steps, typically in the millisecond to microsecond range. The compensation signal CS is then also determined and superimposed onto the desired signal in time discrete manner.

The cogging compensation unit 21 has to ensure that the compensation signal CS corresponds to the actual relative position between shuttle Tn and stator 2 in order to compensate the correct position dependent cogging force F_{Cx}, F_{Cz}, F_{Cy}. To this end the compensation signal CS could also receive an actual position from a position sensor PS as in Fig.8 or Fig.9. In a simpler approach, the cogging compensation unit 21 could simply get a setpoint position which differs from the actual position only by the control error (indicated dashed in Fig.9). The cogging compensation unit 21 could obtain the actual position also from the movement controller 20 or other components of the control unit 10.

As outlined above, the cogging force F_{Cx}, F_{Cy}, F_{Cz} could be stored with additional dependencies, like stator gap SG length or distance to adjacent shuttle. In such case, the compensation unit 21 could also receive additional data, that allows the compensation unit 21 to determine such additional dependencies. The compensation unit 21 could for example receive the position of an adjacent shuttle Tn+1 or the segment gap lengths, or data that allows the compensation unit 21 to determine these quantities.

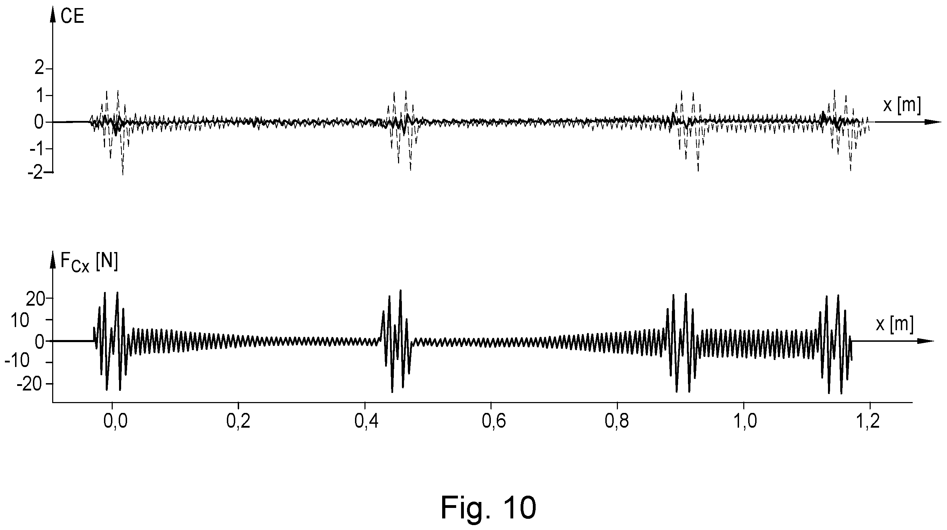

Fig.10 shows the effects of the invention for an exemplary embodiment. In Fig.10 a track of linear motor 1 is assumed that is formed by three stator segments Sm with stator segment gaps SG between two adjacent segments. The first segment (in Fig.10 from left to right) is a curved segment that starts with a certain curvature which transitions into a straight section at the end of the segment. The following segments is the opposite of the first segment, ie. A straight section that transitions into a curved section at the end of the segment. The third segment is a 45° curve. For this example, the cogging force Fc, in movement direction x was determined as described above (Fig.10 below). The inverse of the determined cogging force Fc, was used as compensation signal CS and was superimposed onto the setpoint value SPF of a speed controller SC (as in Fig.9). In Fig.10 top, the control error CE is depicted with compensation of cogging (solid line) and without compensation of cogging (dashed line). As can be seen, in the shown example, the effects of cogging are especially present in curved sections and in stator segment gaps SG, and are less pronounced in straight sections. The compensation of the cogging force Fc, leads to a reduction of the control error CE in all sections.

It was found by the inventors, that the inventive compensation of cogging forces F_{C(x, y, z)} may require higher coil currents during operation of the linear motor 1. This is especially the case in curved sections. Higher drive coil currents lead to higher losses, increased segment temperatures and to a limitation of possible propulsion forces (as more current is required for cogging compensation). Therefore, it can be advantageous to limit cogging compensation speed dependent or to switch-off the compensation above a given speed of the shuttle Tn. The speed dependent reduction of cogging compensation can easily be done linearly, or in any other suitable way, reducing the compensation signal CS with increasing speed.

The speed dependent compensation can of course also be done differently. It would be possible to store the cogging force F_{C(x, y, z)} speed dependent, for example.

A further advantage of the invention is, that the flexibility of the point where the compensation signal CS is applied allows compensation of the effects of cogging even when the position controller PC and speed controller SP, as in Fig.9, are turned off as the current controller IC would still receive an input in form of the compensation signal CS. This allows a manual teach-in of the shuttle Tn movement, for example. When a shuttle Tn is moved manually along the stator 2 (in this case the position controller PC and speed controller SP would be turned off), the cogging forces are felt by the person who moves the shuttle Tn, which makes it harder to teach-in a certain position of the shuttle Tn on the stator 2, for example. When the compensation signal CS is generated during such a manual teach-in operation, the drive coils Asi would be energized but only for compensating the cogging force F_{C(x, y, z)}. This would not hinder the manual teach-in but would make the movement of the shuttle Tn smoother which facilitates this function.

From the above it is apparent that the shuttle Tn with which the cogging force F_{C(x, y, z)} are determined with non-energized drive coils Asi is not necessarily the shuttle Tn for which, during operation of the linear motor 1, the cogging force F_{C(x, y, z)} is compensated. In an embodiment of the invention, the cogging force F_{C(x, y, z)} is determined for a certain shuttle Tn and the determined cogging force F_{C(x, y, z)} is only used to compensate the cogging force F_{C(x, y, z)} for the same shuttle Tn during operation of the linear motor 1. In another embodiment, the cogging force F_{C(x, y, z)} is determined for a certain shuttle Tn and the determined cogging force F_{C(x, y, z)} is used to compensate the cogging force F_{C(x, y, z)} for another shuttle Tn, and possibly also for the same shuttle Tn, during operation of the linear motor 1. In yet another embodiment of the invention, the cogging force F_{C(x, y, z)} is determined with several shuttles Tn and a mean value of the determined cogging forces F_{C(x, y, z)} is used during operation of the linear motor 1 for compensating the cogging force F_{C(x, y, z)} for a shuttle Tn.

## Claims

1. Method for operating a linear motor (1) with at least one shuttle (Tn) and a stator (2), whereas a plurality of drive coils (ASi) is arranged on the stator (2) and a number of drive magnets (4) is arranged on the at least one shuttle (Tn) or a number of drive magnets (4) is arranged on the stator (2) and a number of drive coils (ASi) is arranged on the at least one shuttle (Tn), whereas during operation of the linear motor (1), the drive coils (ASi) in the region of the at least one shuttle (Tn) are energized under control of a control unit (10) to produce an electromagnetic field that interacts with a drive magnetic field produced by the number of drive magnets (4) in order to generate a propulsive force that moves the shuttle (Tn) along the stator (2), **characterized, in that** cogging forces (F_{Cx}, F_{Cy}) at least in one direction of movement (x, y) of the shuttle (Tn) along the stator (2) are determined as a function of the relative position of the at least one shuttle (Tn) with respect to the stator (2) in the at least one direction of movement (x, y) and whilst the drive coils (ASi) in the region of the shuttle (Tn) are non-energized, **in that** the determined cogging forces (F_{Cx}, F_{Cy}) are stored in the control unit (10), **and in that** the cogging forces (F_{Cx}, F_{Cy}) in the at least one movement direction (x, y) determined with non-energized drive coils (ASi) are used by the control unit (10) to compensate the cogging forces (F_{Cx}, F_{Cy}) during operation of the linear motor (1) in dependence of the relative position between a shuttle (Tn) for which the cogging forces (F_{Cx}, F_{Cy}) are compensated and the stator (2) during operation of the linear motor (1).

2. Method according to claim 1, **characterized, in that** cogging forces (F_{Cz}) are additionally be determined in a direction (z) transverse to a direction of movement (x, y) along the stator (2) and whilst the drive coils (ASi) in the region of the at least one shuttle (Tn) are non-energized **and in that** the cogging forces (F_{Cz}) in transverse direction (z) determined with non-energized drive coils (ASi) are used to compensate the cogging forces (F_{Cz}) in transverse direction (z) for a shuttle (Tn) for which the cogging forces (F_{Cz}) are compensated during operation of the linear motor (1).

3. Method according to claim 1 or 2, **characterized, in that** the cogging forces (F_{Cx}, F_{Cy}) in the at least one movement direction (x, y) and/or the cogging forces (F_{Cz}) in the transverse direction (z) are determined with non-energized drive coils (ASi) as a function of the distance of the at least one shuttle (Tn) to a further adjacent shuttle (Tn+1) on the stator (2) **and in that** the determined cogging forces (F_{Cx}, F_{Cy}, F_{Cz}) are used by the control unit (10) to compensate the cogging forces (F_{Cx}, F_{Cy}, F_{Cz}) during operation of the linear motor (1) additionally in dependence of the distance between a shuttle (Tn) for which the cogging forces (F_{Cx}, F_{Cy}, F_{Cz}) are compensated and a further adjacent shuttle (Tn+1) on the stator (2) during operation of the linear motor (1).

4. Method according to one of claims 1 to 3, **characterized, in that** the drive coils (ASi) are arranged on main teeth (11), whereas two adjacent main teeth (11) are distanced in the at least one direction of movement (x, y) by a tooth pitch (τₙ) and the cogging forces (F_{Cx}, F_{Cy}, F_{Cz}) are determined at least for a length in the at least one movement direction (x, y) that corresponds to the tooth pitch (τₙ) **or in that** the drive coils (ASi) are arranged on main teeth (11) with a secondary tooth (12) in between two adjacent main teeth (11), whereas two adjacent main teeth (11) are distanced in the at least one direction of movement (x, y) by a tooth pitch (τₙ) and the cogging forces (F_{Cx}, F_{Cy}, F_{Cz}) are determined at least for a length in the at least one movement direction (x, y) that corresponds to half of the tooth pitch (τₙ).

5. Method according to one of claims 1 to 4, **characterized, in that** the stator (2) comprises a segment gap (SG) in the at least one direction of movement (x, y) of the at least one shuttle (Tn) along the stator (2) and the cogging forces (F_{Cx}, F_{Cy}, F_{Cz}) are additionally determined and stored in the control unit (10) for a transition of the at least one shuttle (Tn) across the segment gap (SG), **and in that** the determined cogging forces (F_{Cx}, F_{Cy}, F_{Cz}) for a transition of the at least one shuttle (Tn) across the segment gap (SG) are used by the control unit (10) to compensate the cogging forces (F_{Cx}, F_{Cy}, F_{Cz}) during operation of the linear motor (1) when a shuttle (Tn) for which the cogging forces (F_{Cx}, F_{Cy}, F_{Cz}) are compensated moves across a segment gap (SG) during operation of the linear motor (1).

6. Method according to claim 5, **characterized, in that** the cogging forces (F_{Cx}, F_{Cy}, F_{Cz}) are determined at least for half a transition of the at least one shuttle (Tn) across the segment gap (SG) and are determined for the other half of the transition by using symmetry.

7. Method according to claim 5 or 6, **characterized, in that** the cogging forces (F_{Cx}, F_{Cy}, F_{Cz}) are determined for different lengths (GL) of the segment gap (SG) in the at least one movement direction (x, y), **in that** the cogging forces (F_{Cx}, F_{Cy}, F_{Cz}) are stored in the control unit (10) as a function of the length (GL) of the segment gap (SG), **and in that** the stored cogging forces (F_{Cx}, F_{Cy}, F_{Cz}) are used by the control unit (10) to compensate the cogging forces (F_{Cx}, F_{Cy}, F_{Cz}) during operation of the linear motor (1) when a shuttle (Tn) for which the cogging forces (F_{Cx}, F_{Cy}, F_{Cz}) are compensated transitions across a segment gap (SG) in dependence of an actual segment gap length (GL) of the segment gap (SG) during operation of the linear motor (1).

8. Method according to claim 7, **characterized, in that** during or at the beginning of the operation of the linear motor (1), the at least one shuttle (Tn) is positioned over the segment gap (SG) so that position sensors (PS) on both sides of the sensor gap (SG) detect a position of the at least one shuttle (Tn), **and in that** the actual segment gap length (GL) is determined with the positions determined with the two position sensors (PS) and with a known geometry of the at least one shuttle (Tn).

9. Method according to claim 7, **characterized, in that** during or at the beginning of the operation of the linear motor (1), the at least one shuttle (Tn) is positioned on a first side of the segment gap (SG) and a first position of the at least one shuttle (Tn) is determined with a first position sensor (PS) and the at least one shuttle (Tn) is positioned on a second side of the segment gap (SG) and a second position of the at least one shuttle (Tn) is determined with a second position sensor (PS), **in that** the difference between the first position and second position is a measure of the actual length (GL) of the segment gap (SG).

10. Method according to claim 7, **characterized, in that** during or at the beginning of the operation of the linear motor (1), a first drive coil (ASi) on a first side of the segment gap (SG) is used as a transmitting coil and a second drive coil (ASi+1) on an opposite side of the segment gap (SG) is used as receiving coil, **in that** the transmitting coil is driven with a given coil voltage causing an electromagnetic field which induces a voltage in the receiving coil **and in that** the induced voltage is measured and correlated with the segment gap length (GL) of the segment gap (SG) with a known relationship.

11. Method according to one of claims 1 to 10, **characterized, in that** a cogging compensation unit (21) uses the stored cogging forces (F_{Cx}, F_{Cy}, F_{Cz}) to determine a compensation signal (CS) that is used in the control unit (10) during operation of the linear motor (1) to influence a manipulated variable (MP) for energizing the active drive coils (ASi) in order to compensate the cogging forces (F_{Cx}, F_{Cy}, F_{Cz}).

12. Method according to claim 11, **characterized, in that** a movement controller (20) calculates the manipulated variable (MP) from a given setpoint value (SP) of the movement of a shuttle (Tn) for which the cogging forces (F_{Cx}, F_{Cy}, F_{Cz}) are compensated, **and in that** the cogging compensation unit (21) superimposes the compensation signal (CS) onto the manipulated variable (MP) or onto the setpoint value (SP).

13. Method according to claim 12, **characterized, in that** the cogging compensation unit (21) calculates the compensation signal (CS) as inverse of the cogging force (F_{Cx}, F_{Cy}, F_{Cz}) **and in that** the cogging compensation unit (21) superimposes the compensation signal (CS) onto a force setpoint value (SPF) of the movement controller (20).

14. Method according to any of claims 1 to 13, **characterized, in that** the compensation of the cogging forces (F_{Cx}, F_{Cy}, F_{Cz}) during operation of the linear motor (1) is done in dependence on the speed of the shuttle for which the cogging forces (F_{Cx}, F_{Cy}, F_{Cz}) are compensated, whereas the compensation is reduced with increasing speed.

15. Linear motor having at least one shuttle (Tn) and a stator (2), whereas a plurality of drive coils (ASi) is arranged on the stator (2) and a number of drive magnets (4) is arranged on the at least one shuttle (Tn) or a number of drive magnets (4) is arranged on the stator (2) and a number of drive coils (ASi) is arranged on the at least one shuttle (Tn), whereas a control unit (10) of the linear motor (1) is provided that is arranged to energize the drive coils (ASi) in the region of the at least one shuttle (Tn) during operation of the linear motor (1) to produce an electromagnetic field that interacts with a drive magnetic field produced by the drive magnets (4) in order to generate a propulsive force that moves the at least one shuttle (Tn) along the stator, **characterized, in that** a storage unit (22) is provided in the control unit (10) that stores cogging forces (F_{Cx}, F_{Cy}) at least in one direction of movement (x, y) of the at least one shuttle (Tn) along the stator (2), said cogging forces (F_{Cx}, F_{Cy}) being determined as a function of the relative position of the at least one shuttle (Tn) with respect to the stator (2) in the at least one direction of movement (x, y) and whilst the drive coils (ASi) in the region of the at least one shuttle (Tn) are non-energized, **and in that** the control unit (10) is arranged to use the stored cogging forces (F_{Cx}, F_{Cy}) in the at least one movement direction (x, y) determined with non-energized drive coils (ASi) to compensate the cogging forces (F_{Cx}, F_{Cy}) during operation of the linear motor (1) in dependence of the relative position between a shuttle (Tn) for which the cogging forces (F_{Cx}, F_{Cy}) are compensated and the stator (2) during operation of the linear motor (1).
